# EUROPÄISCHE PATENTSCHRIFT

(11) **EP 1 310 765 B1**
(45) Veröffentlichungstag und Bekanntmachung des Hinweises auf die Patenterteilung: **03.10.2007**
(21) Anmeldenummer: 02025119.5
(22) Anmeldetag: 08.11.2002
(51) Int. Cl.: G01C 15/02

(54) **Markierungselement zum Vermessen von Bauwerken**
Marking element for measuring building structures
Elément de marquage pour mésurer des structures de batiment

(30) Priorität: 09.11.2001 DE 20118240 U
(43) Veröffentlichungstag der Anmeldung: 14.05.2003
(73) Patentinhaber: Rothbucher, Georg, 83457 Bayerisch Gmain (DE)
(72) Erfinder: Rothbucher, Georg, 83457 Bayerisch Gmain (DE)
(74) Vertreter: Schaumburg, Karl-Heinz

(56) Entgegenhaltungen:
- EP-A- 1 054 266
- DE-A- 19 627 188
- FR-A- 2 204 797
- FR-A- 2 723 213
- FR-A- 2 723 214

## Beschreibung

Die Erfindung betrifft ein Markierungselement zum Vermessen von Bauwerken mit zwei rechteckigen Platten, die entlang eines ihrer Ränder unter einem rechten Winkel miteinander verbunden sind, wobei das Markierungselement auf mindestens einer Plattenfläche eine Signalmarke trägt. Ein solches Markierungselement ist aus der EP 1 054 266 A2 bekannt.

Ein anderes Markierungselement ist beispielsweise aus der DE 196 27 188 A bekannt und dient zur Markierung des Meterrisses in Bauwerken. Der Meterriss stellt eine Markierung dar, die üblicherweise exakt einen Meter über dem zukünftigen fertigen Fußboden liegen soll. Dieser Meterriss bildet den Referenzpunkt für alle weiteren Ausbaumaßnahmen, wie die Verlegung des Bodens, das Setzen der Türstöcke und dergleichen. Das bekannte Markierungselement kann dauerhaft an einer Gebäudewand befestigt werden, so dass sich der durch das Markierungselement angegebene Referenzpunkt jederzeit wieder auffinden lässt im Gegensatz beispielsweise zu einem einfachen Bleistiftstrich. Andererseits lässt sich das Markierungselement preiswert genug fertigen, um es im Gebäude zu belassen.

Um die Signalmarke an dem bekannten Markierungselement aber anpeilen zu können, benötigt man einen gewissen Abstand in Front des Markierungselementes. Der erforderliche Freiraum ist in der Praxis nicht immer gegeben oder kann nicht entsprechend genutzt werden. Dies ist beispielsweise der Fall, wenn das Markierungselement an einem Brückenpfeiler oder in einem engen Gang oder in relativ großer Höhe über dem Boden angeordnet ist.

Aus der DE 195 36 295 C ist bereits ein räumlich gestalteter Signalkörper nach Art eines regulären Polyeders bekannt, auf dessen Flächen jeweils eine Signalmarke angeordnet ist derart, dass aus jeder Raumrichtung mindestens eine der Signalmarken nahezu senkrecht oder aus einem steilen Winkel beobachtbar ist. Dieses räumliche Markierungselement löst bis zu einem gewissen Grad die vorstehend genannten Schwierigkeiten, ist jedoch aufwendig zu fertigen. Darüber hinaus lässt sich der DE 195 36 295 C nicht entnehmen, wie dieses Markierungselement an einem Bauwerk befestigt werden könnte.

Der Erfindung liegt die Aufgabe zugrunde, ein Markierungselement der eingangs genannten Art so weiterzubilden, dass es einerseits einfach und preiswert herzustellen ist, aus mindestens zwei Raumrichtungen angepeilt werden kann und vielseitig verwendbar ist.

Diese Aufgabe wird erfindungsgemäß durch die im Anspruch 1 angegebenen Merkmale gelöst. Erfindungsgemässe Weiterbildungen sind in den abhängigen Ansprüchen definiert.

Das erfindungsgemäße Markierungselement kann mit der ersten Platte in der gleichen Weise an der Wand eines Bauwerks befestigt werden, wie dies in der DE 196 27 188 A beschrieben ist. Vorzugweise geschieht dies dabei so, dass die zweite Platte dann oberhalb der ersten Platte von der die erste Platte tragenden Wand absteht und somit eine Art Dach für die auf der ersten Platte angeordnete Signalmarke bildet. Dies hat den Vorzug, dass dadurch die Signalmarke auf der ersten Platte gegenüber Witterungseinflüssen geschützt wird. Die Signalmarken sind häufig als Reflektoren ausgebildet, die aus einem Lichtstrahlen in vorgegebener Weise reflektierenden Material bestehen. Die Qualität dieser Reflektoren leidet relativ rasch unter den Witterungsbedingungen. Gleichzeitig kann die auf der zweiten Platte angeordnete Signalmarke unter einem völlig anderen Winkel als die auf der ersten Platte angeordnete Marke angepeilt werden. Wird beispielsweise ein erfindungsgemäßes Markierungselement an einem Brückenpfeiler angeordnet, besteht so die Möglichkeit, die auf der zweiten Platte angeordnete Signalmarke von oben, d.h. von einem Standort auf der Brücke oder auch vom Pfeilerfuß aus anzupeilen. Beide Standorte wären ungeeignet, um die an der ersten Platte, d.h. an einer zur Wand des Brückenpfeilers parallelen Fläche angeordnete Signalmarke anzupeilen.

Zweckmäßigerweise erstreckt sich das jeweilige Langloch parallel zu einer Rechteckseite. Dies erleichtert das Ausrichten des Markierungselementes. Wenn entlang jedes der freien Ränder mindestens einer der Platten ein Langloch ausgebildet ist, kann das Markierungselement in zwei zueinander senkrechten Richtungen exakt an der es tragenden Wand ausgerichtet und eingemessen werden. Die endgültige Fixierung des Markierungselementes an der es tragenden Wand kann dann mit Hilfe von Nägeln erfolgen, die beispielsweise durch ein Fixierloch in der jeweiligen Platte geschlagen werden.

Da beide Platten mindestens ein Langloch und mindestens ein Befestigungsloch haben, um das Markierungselement in einer gewünschten Lage an der es tragenden Wand zu befestigen, und beide Platten beidseitig jeweils eine Signalmarke tragen, bietet dies die Möglichkeit, das erfindungsgemäße winkelförmige Markierungselement beispielsweise an einer Ecke anzusetzen, an der zwei Gehäusewände aufeinanderstoßen, so dass das Markierungselement von zwei Richtungen her angepeilt werden kann. Dies ist besonders vorteilhaft, wenn das Markierungselement dadurch beispielsweise sowohl aus dem Inneren eines Gebäudes als auch von außen her angepeilt werden kann, da die auf demselben Markierungselement befindlichen Signalmarken in einer festen räumlichen Beziehung zueinander stehen.

Das erfindungsgemäße Markierungselement kann auf einfache Weise, beispielsweise als Kunststoffkörper hergestellt werden, auf dem dann die Signalmarken befestigt werden, die beispielsweise aus einer Reflektionsfolie bestehen. Die Signalmarken können aber auch integraler Bestandteil des Kunststoffkörpers sein oder bei dessen Herstellung mit diesem verbunden werden.

Weitere Merkmale und Vorteile der Erfindung ergeben sich aus der folgenden Beschreibung, welche in Verbindung mit den beigefügten Zeichnungen die Erfindung anhand eines Ausführungsbeispieles erläutert.

Es zeigen:
- Fig. 1: eine perspektivische teilweise schematische Darstellung eines erfindungsgemäßen Markierungselementes mit Blickrichtung auf den Innenwinkel zwischen den beiden Platten,
- Fig. 2: eine Ansicht des Markierungselmentes in Richtung des Pfeiles A,
- Fig. 3: eine Ansicht des Markierungselementes in Richtung des Pfeiles B in Fig. 1,
- Fig. 4: eine Ansicht des Markierungselementes in Richtung des Pfeiles C in Fig. 1,
- Fig. 5: eine schematische Darstellung einer ersten Anwendung des erfindungsgemäßen Markierungselementes an einem Brückenbauwerk,
- Fig. 6: eine schematische Darstellung einer weiteren Anwendung des erfindungsgemäßen Markierungselementes an einem Gebäude und
- Fig. 7: einen Teilschnitt durch das erfindungsgemäße Markierungselement entlang Linie VII-VII in Fig. 4

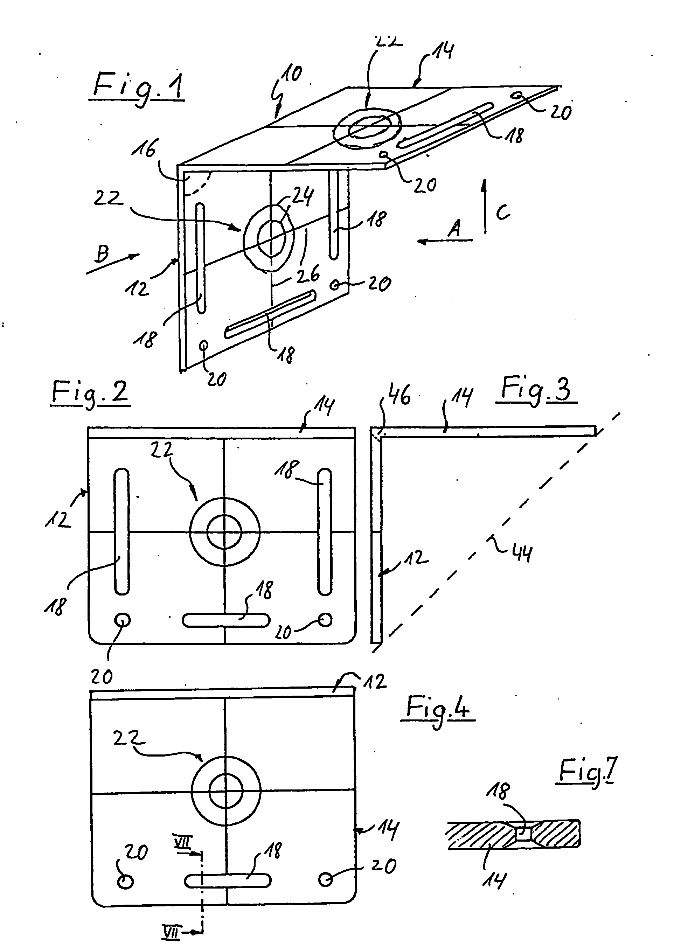

Das in der Fig. 1 allgemein mit 10 bezeichnete Markierungselement besteht aus einer ersten rechteckigen Platte 12 und einer zweiten rechteckigen Platte 14, die entlang einer ihrer Rechteckseiten unter Bildung eines Winkels 16 von 90° miteinander verbunden sind. Die erste Platte 12 hat parallel zu ihren freien Rändern jeweils ein Langloch 18, durch das eine Schraube oder ein Nagel gesteckt werden kann, um das Markierungselement 10 mit der Platte 12 an einer Wand eines Bauwerkes zu befestigen und parallel zu der Wand zu verschieben, bevor die Platte 12 dann endgültig an der Wand befestigt wird. Hierzu dienen weitere Befestigungslöcher 20 in der ersten Platte 12, durch die ebenfalls ein Nagel oder eine Schraube gesteckt werden kann, wobei dann sichergestellt ist, daß die Platte 12 an der sie tragenden Wand nicht mehr parallel zu sich selbst verschoben werden kann.

Die zweite Platte 14 hat ebenfalls ein Langloch 18 und Befestigungslöcher 20, wobei selbstverständlich die Platte 14 auch in der gleichen Weise wie die erste Platte 12 entlang der drei freien Ränder Langlöcher 18 haben kann. Die Ränder der Langlöcher 18 sind in der aus der Fig. 7 ersichtlichen Weise abgeschrägt, so daß sie sich zur jeweiligen Plattenoberfläche hin erweitern. Das erleichtert die Herstellung des Markierungselementes ebenso wie seine Befestigung an einer Wand.

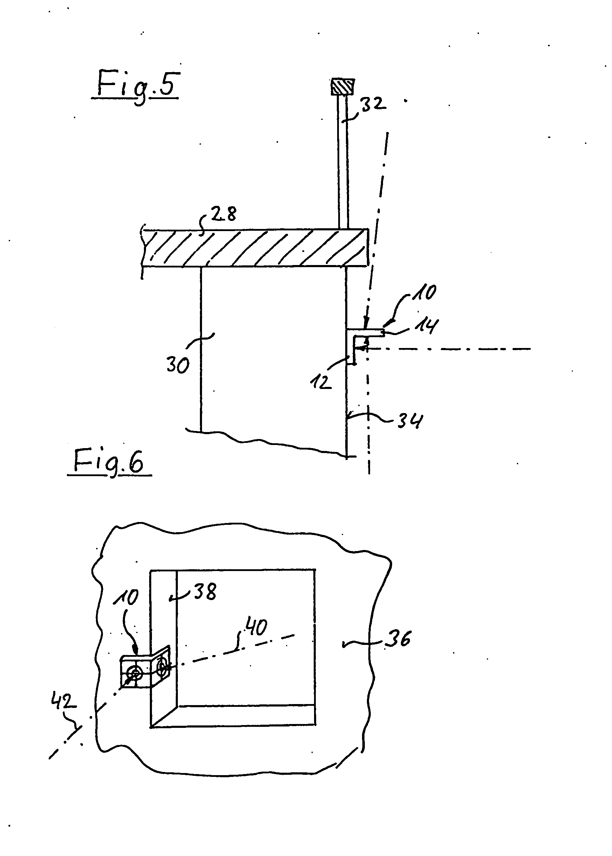

Auf der dem Innenwinkel 16 zwischen den Platten 12 und 14 zugekehrten Fläche der ersten Platte 12 ist eine Signalmarke 22 angeordnet, die aus konzentrischen Kreisen 24 und einem Fadenkreuz 26 besteht, dessen Schnittpunkt im Mittelpunkt der Kreise 24 liegt. Die Signalmarke 22 kann auf einer Folie ausgebildet sein, die aus einem hochreflektierenden Material besteht und auf die erste Platte 12 aufgeklebt wird. Die zweite Platte 14 trägt auf ihren beiden Seiten jeweils eine Signalmarke 22, wie dies aus den Figuren 1 und 4 zu entnehmen ist. Auch die erste Platte 12 kann auf beiden Seiten eine Signalmarke 22 haben, so daß auch die Außenseite der ersten Platte 12 für Peilzwecke genutzt werden kann, wie dies anhand der Fig. 6 weiter unten noch erläutert wird.

Fig. 5 zeigt eine erste Anwendungsmöglichkeit des erfindungsgemäßen Markierungselementes. Fig. 5 zeigt in schematischer Weise Teile einer Brücke, nämlich eine Fahrbahn 28, einen Brückenpfeiler 30 und ein Brückengeländer 32. An dem Brückenpfeiler 30 ist ein Markierungselement 10 in der Stellung an einer vertikalen Wand 34 des Brückenpfeilers 30 in der Stellung befestigt, wie es in Fig. 1 dargestellt ist. Man erkennt, daß das Markierungselement von den durch strichpunktierte Linien angegebenen Richtung her angepeilt werden kann. Besonders vorteilhaft ist in dem dargestellten Fall, daß das Markierungselement von der Fahrbahn 28 der Brücke aus angepeilt werden kann. Man stelle sich vor, daß die Brücke ein Gewässer überspannt, wobei der Brückenpfeiler 30 relativ weit vom Ufer entfernt ist und keine Möglichkeit besteht, am Fuß des Pfeilers ein Meßgerät zu installieren.

Ein zweiter Anwendungsfall ist in Fig. 6 dargestellt. Er zeigt die Befestigung eines Markierungselementes gemäß Fig. 1 an zwei unter einem rechten Winkel zusammenstoßenden Gebäudeflächen, nämlich einer Gebäudeaußenwand 36 und einer Fensterleibung 38. Dies bietet die Möglichkeit, einen von dem Gebäudeinneren (Meßstrahl 40 in Fig. 6) her eingemessenen Referenzpunkt in eine feste räumliche Beziehung zu einem vom Gebäudeaußenraum her (entlang dem Meßstrahl 42) eingemessenen Referenzpunkt zu setzen. Und damit einen Referenzpunkt sowohl vom Gebäudeinneren als auch vom Gebäudeaußenraum her zu kontrollieren.

Neben den dargestellten Anwendungsmöglichkeiten besteht auch die Möglichkeit, das erfindungsgemäße Markierungselement 10 dachartig auf eine in Fig. 3 gestrichelt dargestellte Fläche 44 aufzusetzen und in dieser Position zu fixieren. Hierzu sind in dem Scheitel, an dem die beiden Platten 12 und 14 miteinander verbunden sind, in Richtung der Winkelhalbierenden des Winkels 16 verlaufende, in Fig. 3 gestrichelt dargestellte Löcher 46 vorgesehen, durch die dann jeweils ein Nagel gesteckt werden kann, mit dem das Markierungselement 10 an der Oberfläche 44 befestigt werden kann. Auch diese Anordnung bietet die Möglichkeit, das Markierungselement aus einem großen Raumwinkel anzupeilen, indem man entweder die auf der Außenseite der ersten Platte 12 oder die auf der Außenseite der zweiten Platte 14 angeordnete Signalmarke 22 anpeilt.

## Patentansprüche

1. Markierungselement (10) zum Vermessen von Bauwerken mit zwei rechteckigen Platten (12, 14), die entlang eines ihrer Ränder unter einem rechten Winkel miteinander verbunden sind, wobei das Markierungselement auf mindestens zwei seiner Plattenflächen jeweils eine Signalmarke (22) trägt, **dadurch gekennzeichnet, dass** die beiden Platten (12, 14) auf ihren beiden Plattenflächen jeweils eine Signalmarke (22) tragen, dass jede der Platten (12, 14) mindestens ein Langloch (18) hat, das sich parallel zu einer Rechteckseite erstreckt, und dass jede der Platten (12, 14) mindestens ein sie durchsetzendes Fixierloch (20) hat.

2. Markierungselement nach Anspruch 1, **dadurch gekennzeichnet, dass** entlang jedes der freien Ränder mindestens einer der Platten (12, 14) ein Langloch (18) ausgebildet ist.

3. Markierungselement nach Anspruch 1 oder 2, **dadurch gekennzeichnet, dass** in dem Scheitel, an dem die beiden Platten (12, 14) rechtwinklig miteinander verbunden sind, in Richtung der Winkelhalbierenden des rechten Winkels verlaufende Fixierlöcher (46) vorgesehen sind.

4. Markierungselement nach einem der Ansprüche 1 bis 3, **dadurch gekennzeichnet, dass** es einen vorzugsweise aus Kunststoff hergestellten einstückigen Körper hat, an dessen Plattenflächen die Signalmarken (22) vorgesehen sind.

5. Markierungselement nach Anspruch 4, **dadurch gekennzeichnet, dass** die Signalmarken (22) aus einem Lichtstrahlen reflektierenden Material hergestellt sind.

6. Markierungselement nach einem der Ansprüche 1 bis 5 , **dadurch gekennzeichnet, dass** die Ränder des mindestens einen Langloches (18) derart abgeschrägt sind, dass das Langloch (18) zu den jeweiligen Plattenoberflächen hin breiter wird.

## Claims

1. Marking element (10) for measuring building structures with two rectangular plates (12, 14) which are connected at right angles to each other along one of their edges, whereby the marking element has a signal marker (22) on at least two of its plate surfaces, **characterised in that** the two plates (12, 14) each have a respective signal marker (22) on their two plate surfaces, **in that** each of the plates (12, 14) has at least one elongated hole (18) which extends parallel to a side of the rectangle and **in that** each of the plates (12, 14) has at least one fixing hole (20) going through it.

2. Marking element according to claim 1, **characterised in that** an elongated hole (18) is formed along each of the free edges of at least one of the plates (12, 14).

3. Marking element according to claim 1 or 2, **characterised in that** fixing holes (46) extending in the direction of the angle halving area of the right angle are provided in the apex at which the two plates (12, 14) are connected to each other at right angles.

4. Marking element according to one of the claims 1 to 3, **characterised in that** it has an one-part body preferably produced form plastic, on the plate surfaces of which the signal markers (22) are provided.

5. Marking element according to claim 4, **characterised in that** the signal markers (22) are produced from a material which reflects light beams.

6. Marking element according to one of the claims 1 to 5, **characterised in that** the edges of the at least one elongated hole (18) are bevelled in such a way that the elongated hole (18) becomes wider towards the plate surfaces.

## Revendications

1. Elément de repérage (10) permettant de mesurer des ouvrages de construction au moyen de deux plaques rectangulaires (12, 14) qui sont reliées entre elles le long de l'un de leurs bords en formant en angle droit, ledit élément de repérage portant sur au moins deux de ses surfaces de plaque un repère respectif (22), **caractérisé en ce que** les deux plaques (12, 14) portent chacune sur leurs deux surfaces de plaque un repère respectif (22), **en ce que** chacune des plaques (12, 14) comporte au moins un trou oblong (18) qui s'étend parallèlement à un côté du rectangle, et **en ce que** chacune des plaques (12, 14) comporte au moins un trou de fixation (20) traversant de part en part ladite plaque.

2. Elément de repérage selon la revendication 1, **caractérisé en ce qu'**un trou oblong (18) est ménagé le long de chacun des bords libres d'au moins une des plaques (12, 14).

3. Elément de repérage selon la revendication 1 ou 2, **caractérisé en ce que** des trous de fixation (46) sont ménagés dans le sommet, où les deux plaques (12, 14) sont reliées entre elles en formant un angle droit, lesquels trous s'étendent suivant la bissectrice de l'angle droit.

4. Elément de repérage selon l'une des revendications 1 à 3, **caractérisé en ce qu'**il comporte un corps d'une seule pièce, avantageusement en matière plastique, dont les surfaces de plaque sont dotées des repères (22).

5. Elément de repérage selon la revendication 4, **caractérisé en ce que** les repères (22) sont fabriqués à partir d'un matériau réfléchissant les rayons lumineux.

6. Elément de repérage selon l'une des revendications 1 à 5, **caractérisé en ce que** les bords dudit au moins un trou oblong (18) sont biseautés de telle sorte que le trou oblong (18) s'élargit en direction des surfaces de plaque respectives.
